# EUROPEAN PATENT SPECIFICATION

(11) **EP 1 884 122 B1**
(45) Date of publication and mention of the grant of the patent: **25.03.2009**
(21) Application number: 06753656.5
(22) Date of filing: 16.05.2006
(51) Int. Cl.: H04Q 1/14

(54) **DISCONNECTION POINTS IN A TELECOMMUNICATION SYSTEM**
TRENNUNGSPUNKTE IN EINEM TELEKOMMUNIKATIONSSYSTEM
POINTS DE DECONNEXION DANS UN SYSTEME DE TELECOMMUNICATION

(30) Priority: 17.05.2005 GB 0510047; 10.06.2005 GB 0511843; 13.06.2005 GB 0511958
(43) Date of publication of application: 06.02.2008
(73) Proprietor: Tyco Electronics Raychem NV, 3010 Kessel-Lo (BE)
(72) Inventor: VASTMANS, Kristof, B-3370 Boutersem (BE); ARIAS, Juan Tomas, E-28100 Alcobendas Madrid (ES); DE WOLF, Werner, Leo, Theodor, B-3210 Linden (BE)
(74) Representative: Lampe, Sigmar
(86) International application number: PCT/EP2006/004631
(87) International publication number: WO 2006/122758

(56) References cited:
- WO-A-20/04032563

## Description

The present invention relates to new or additional services, e.g. xDSL services such as ADSL, in a telecommunication system, e.g. a telephone system especially to methods of interconnection and to interconnection points for connecting telecommunication services. The present invention particularly relates to the provision of disconnection points in a telecommunication system.

### TECHNICAL BACKGROUND

Internet access from home can be provided via a plain old telephone service (POTS), where a telephone line comprising a pair of copper wires provides a two-way communication path between a modem and a central office (CO). The latter connects the modem to a specified on-line service provider through a public switched telephone network (PSTN). Telephone companies are introducing new services, including an asymmetric digital subscriber line (ADSL) service, which permits fast on-line access. For example, the ADSL service supports uplink traffic having a lower bit rate than the downlink traffic. For economic reasons, the ADSL traffic traverses the same copper wire pair traditionally used as the telephone line in the POTS. A general reference to xDSL telecommunication systems is: "ADSL & DSL Technologies, 2nd Ed., W. J. Goralski, Osbourne/McGraw Hill, 2002.

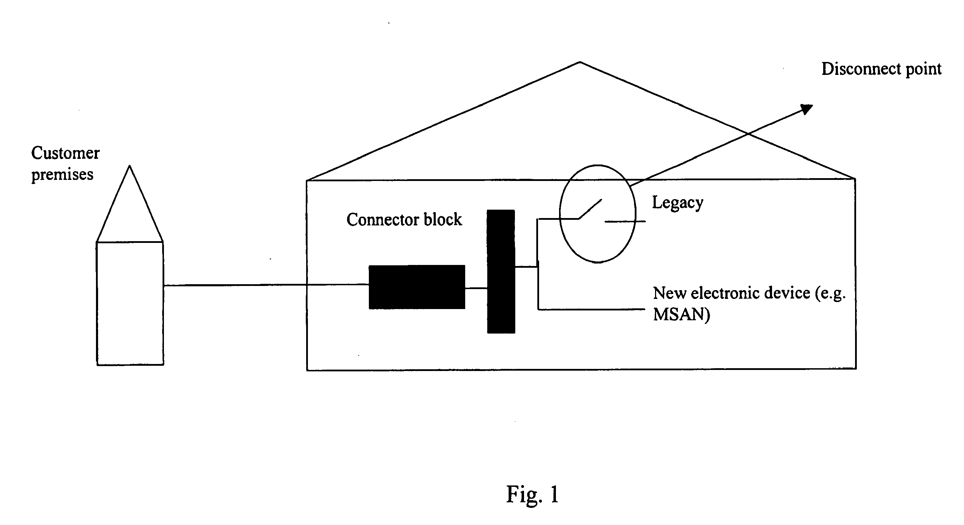

Nowadays, telecommunication centrals are being upgraded on the one hand to provide extra DSL services and secondly to save space by replacing old electronic devices, e.g. a legacy switch, by new switches/electronic devices (e.g. MSAN - see Fig. 1). From service level point of view it is often unacceptable to bring the new switch or equivalent electronic device (e.g. MSAN) in service from day one and directly physically decouple the old switch or electronic device. Cutting copper wires to obtain such replacement is often not accepted as an option, because cabling cannot always be cut near the relevant connector block due to space restrictions and accessibility. Then cutting the copper wires creates a stub effect. Hence there is a need for a disconnection point.

US 5,991,140 describes re-wiring in a terminal where a POTS channel unit and the ADSL channel unit are deployed, the re-wiring being realized by connecting the POTS channel unit to the ADSL channel unit using a patch cord. The patch cord includes a circuit for protecting equipment including the channel units in the terminal from abnormal electrical conditions, e.g. an over-voltage condition.

WO 2004/032563 shows a plug-in module for test access by obtaining a metal port. To obtain a metal port for test purposes requires that the telecommunications provided by the distribution frame are interrupted so that testing of the lines can be carried out.

### SUMMARY OF THE INVENTION

An object of the present invention relates to the provision of new or additional services, e.g. xDSL services such as ADSL, in a telecommunication system, e.g. a telephone system especially to improved methods of interconnection and to interconnection points for connecting telecommunication services. The present invention provides a distribution frame with at least one connector block, the connector block being mechanically connectable with the distribution frame to thereby cooperate electrically with the distribution frame to provide a first signal path between a first side and a second side of the distribution frame, the connector block having connector means for connecting a signal cable for an additional telecommunication service and being provided with a communication path for providing a second signal path between the signal cable and the second side of the distribution frame. The connector block can have a disconnection unit for providing two states of the connector block, in the first state at least the first signal path is provided and in the second state at least the second signal path is provided. Optionally, in the first state the second signal path is not provided and/or in the second state the first signal path is not provided. The disconnection unit can also provide for two states of the connector block, in the first state at least the second signal path is provided and in the second state at least the first signal path is provided. Optionally, in the first state the first signal path is not provided and/or in the second state the second signal path is not provided.

The disconnection unit can be switched from the first sate to the second state remotely, for example the disconnection unit comprises a disconnection device and a coupler, the coupler providing a connection to the distribution frame, e.g. when the connector block is inserted therein, the disconnection device being remotely activatable or activatable only local to the distribution frame.

The locally activatable disconnection device can be a switch, a relay, a jumper cable or a connector or for example the remotely activatable disconnection device can be a switch or a relay.

In addition the connector block can further comprise a test access point.

The second signal path can be used for a DSL service, e.g. ADSL and can be a permanent or semi-permanent connection. The disconnection unit can be adapted to provide the first and the second signal paths in parallel in the second state. Alternatively, the disconnection unit can be adapted to provide the first and the second signal paths in parallel in the first state. The first signal path and/or second signal path can be used for a telephone service. The telephone service need not be only a test access.

The present invention also provides a connector block for use with a distribution frame, the connector block having means for connecting the connector block with the distribution frame to thereby cooperate electrically with the distribution frame to provide a first signal path between a first side and a second side of the distribution frame, the connector block having connector means for connecting a signal cable for an additional telecommunication service and being provided with a communication path for providing a second signal path between the signal cable and the second side of the distribution frame. The connector block can also have a disconnection unit for providing two states of the connector block, in the first state at least the first signal path is provided and in the second state at least the second signal path is provided. Optionally, in the first state the second signal path is not provided and/or optionally, in the second state the frist signal path is not provided.

Alternatively, the disconnection unit can provide two states of the connector block, in the first state at least the second signal path is provided and in the second state at least the first signal path is provided. Optionally, in the first state the first signal path is not provided. Optionally, in the second state the second signal path is not provided.

The disconnection unit can be switched from the first sate to the second state remotely, for example. The disconnection unit can comprise a disconnection device and a coupler, the coupler providing a connection to the distribution frame when the connector block is connected thereto, the disconnection device being remotely activatable or activatable only locally to the connector block. The locally activatable disconnection device can be a switch, a relay, a jumper cable or a connector. The remotely activatable disconnection device can be a switch or a relay. The disconnection unit can be adapted to provide the first and the second signal paths in parallel in the first or the second state.

Any connector block of the present invention may further comprise a test access point.

The present invention provides a method of connecting an additional service to a distribution frame with at least one connector block, the connector block being mechanically connectable with the distribution frame to thereby cooperate electrically with the distribution frame to provide a first signal path between a first side and a second side of the distribution frame, the method comprising: connecting a signal cable for an additional telecommunication service to the connector block to thereby provide a second signal path between the signal cable and the second side of the distribution frame. The connector block can have a disconnection unit for providing two states of the connector block, in the first state at least the first signal path is provided and in the second state at least the second signal path is provided, the method further comprising changing the connector block from the first to the second state. Alternatively, the disconnection unit can provide two states of the connector block, in the first state the at least the second signal path is provided and in the second state at least the first signal path is provided, the method further comprising changing the connector block from the first to the second state or vice versa. The changing can be made locally to the connector block or remotely therefrom. The second signal path can be for a DSL service. The first signal path can be for a telephone service, e.g. POTS. The second signal path need not just be a test access.

### BRIEF DESCRIPTION OF THE DRAWINGS

Figure 1 shows a telecommunications system to which the present invention can be applied.
Figure 2 shows a distribution frame to which the present invention can be applied.
Figure 3 shows a connector block in accordance with an embodiment of the present invention.
Figures 4A to C show connector blocks in accordance with further embodiments of the present invention.
Figure 5 shows a fan out cable for use with connector blocks according to the present invention.
Figures 6 to 10 show connector blocks in accordance with further embodiments of the present invention.
Figures 11A to C show a connector block in accordance with the present invention and
Figures 11D and E show application of a connector block in accordance with the present invention in a distribution frame.
Figs. 12a and b show schematic connection diagrams for a connector block in accordance with an embodiment of the present invention.
Figs. 13a to c show schematically preferred embodiments of the present invention.

### DESCRIPTION OF THE ILLUSTRATIVE EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

The present invention provides a disconnect point for upgrading and/or providing an additional service, e.g. a DSL service, in a telecommunications network, e.g. a POTS. An advantage of the present invention is that space is saved by replacing old electronic devices, e.g. a legacy switch, by new switches or electronic devices (e.g. MSAN). From service level point of view it is often unacceptable to bring the new switch or equivalent electronic device (e.g. MSAN) into service from day one and directly physically decouple the old switch or electronic device. Instead, it can be done in phases and additionally the transition between phases can be established so that down time is minimized. For example the present invention allows: Phase 1 for coupling the new switch/electronic device (e.g. MSAN) to the network (non-functionally) while the relevant service is can optionally still provided by the old electronic device. Phase 2 comprises switching off the old switch (e.g. legacy switch), and bringing the new electronic device into service. It is possible to switch back to the legacy device. This gives the advantage to bring the old switch back in service in case problems occur in the transition period. The third phase is to physically disconnect the old electronic device by means of a mechanical or electrical disconnect at the connector block level which effectively cuts the copper wire interconnection. After this step the old equipment and cabling is removed and space becomes available again. The present invention has the advantage that it allows this last disconnection as close as possible to the connector block to avoid signal interference due to external factors, e.g. to lengths of cut cable (e.g. the stub effect).

An aspect of the present invention is to make an electrical or mechanical disconnection point possible at connector block level, e.g. at the customer side or switch side, and integrate a fast reliable and/or compact connect system for a new electronic device in one block. At least two disconnect mechanisms are proposed as alternatives:
a) Electrical disconnection realized by controllable or activatable devices, e.g. remotely or locally controllable and activatable devices, such as latching relays or equivalent. The devices have two states. The activation may be local or remote to the connector block.
b) Mechanical disconnection point with two states and activatable between a first and a second state as realized in various ways, e.g. 1) mechanical switch such as a sliding switch, or 2) a dipswitch or mechanical systems using a plugging action such as 3) a jumper cable (e.g. connector based) 4) or a bridge system. The mechanical solution can have the advantage that no electrical drivers or activators are required.
   Test access may be included in the disconnection point, e.g. the disconnection point may include a test access module in addition to the connect/disconnect capability.

In one aspect the present invention provides an integrated disconnection block system, optionally with a test access module especially as a simple click-on module established at connector block level. Switching between old and new electronic devices can be realized without a customer disconnect unit integratable into the connector block. This allows upgrading of current copper networks in central offices, e.g. for addition of xDSL, such as ADSL services, or for upgrading remote locations.

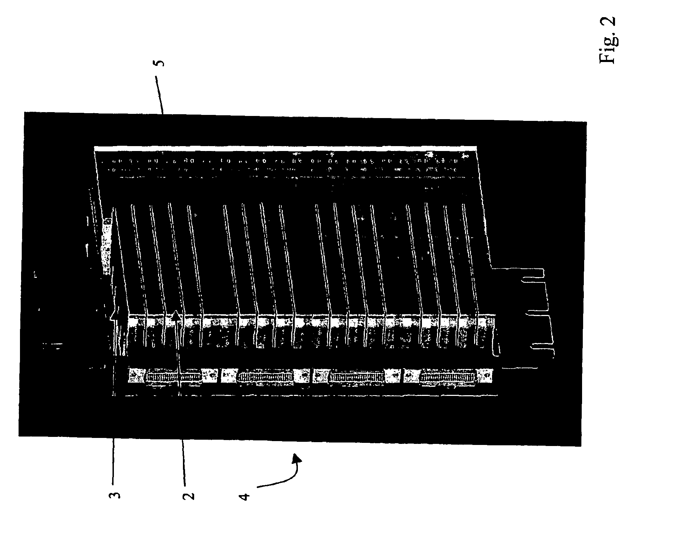

Figure 2 shows a schematic view of a Main Distribution Frame (MDF). This device may be located in a central office or remotely. Connector blocks 2 are locatable in a connection and protection plane 3 of the MDF which couple an input signal applied to the signal plane 4 via a connection and protection plane to the jumper plane 5. The signal plane 4 is the equipment side of the MDF, i.e. is connected to a legacy device such as a legacy switch. The present invention relates to a modified version of the connector block 2 which allows a variety of possibilities, e.g. the connection of a new service or equipment while maintaining legacy services or maintaining potential access to legacy services or also allowing disconnection of the legacy service once the new service is functional, or disconnection of the new service and return to the legacy service if this is necessary.

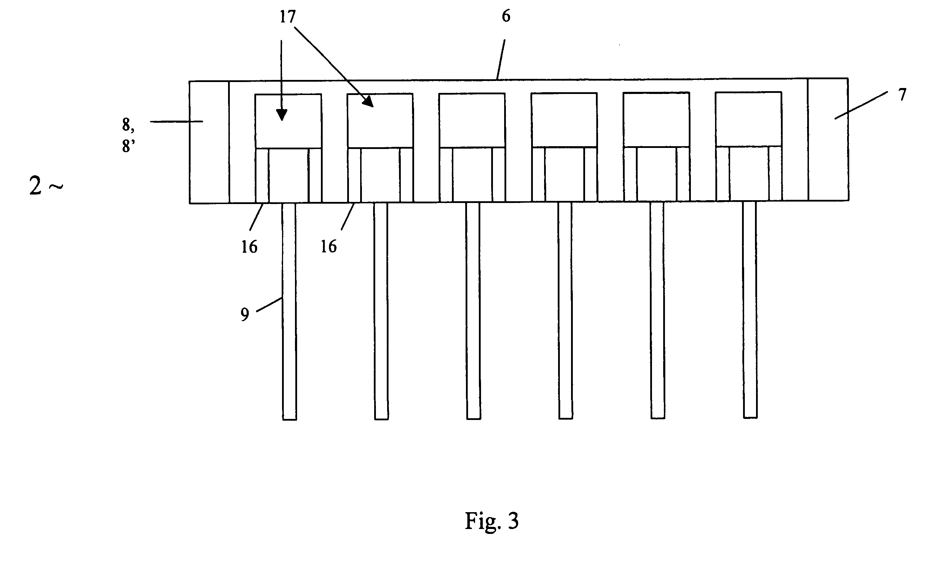

A schematic generic connector block in accordance with embodiments of the present invention is shown in Fig. 3. The functional elements of the connector block are:
A block housing or body 6 made of an insulating material such as plastic. Conductive elements, e.g. metal elements 9 are provided which are connectable to the distribution frame, e.g. plug into the connection and protection plane and are used to connect to ground potential, connectors 16 (typically 4) for connecting the signal plane 4 of the MDF to connections on the jumper plane 5 so that a signal applied to the signal plane 4 is transferred to the jumper plane 5 via the connection and protection plane via a first signal path; and optionally protection units 17 which are integrated with the connections 16 to provide protection, e.g. overvoltage protection. The connections 16 cooperate with pins sticking up from the distribution frame to provide connections for the signal paths. The inverse could be the case, e.g. pins in the connector block and connectors in the distribution frame, or any other method of making electrical connections. The signal to be applied to the signal plane is provided from a legacy device such as a legacy switch. Unit 7 is a connector for connecting new equipment to the MDF. It provides a second signal path for a signal from the new equipment to the jumper plane 5. There can be parallel first and second signal pathways between the legacy equipment and the jumper plane and between the new equipment and the jumper plane, respectively. Optionally, only one of the pathways is available depending on whether the connector block is in a first state or a second state. The transition between the first state and the second state can be provided by a disconnect unit which can be in a first state or a second state. The change from one state to another can achieved by a disconnect unit. In a first state the disconnect unit allows at least the second signal path, whereas in the second state at least the first signal path is allowed. In the first state both the first and second signal paths may be allowed in parallel or only the second signal path. In the second state both the first and second signal paths may be allowed in parallel or only the first signal path. Alternatively, in a first state the disconnect unit allows at least the first signal path, whereas in the second state at least the second signal path is allowed. In the first state both the first and second signal paths may be allowed in parallel or only the first signal path. In the second state both the first and second signal paths may be allowed in parallel or only the second signal path.

The disconnection unit may include a disconnect device and a coupler. When inserted in the MDF, the coupler is connected directly to the conductor paths in the lVmF. The disconnect device can take various forms. The disconnect device can be physically separable from the connector block, e.g. can be provided by a jumper cable or a plug-in connector. However, the change of state can be also achieved by activatable, e.g. switchable devices such as switches or relays. In this case the disconnect device is provided by the switches or relays. Where the disconnect/connect function is provided by switches or relays, these do not require physical removal from the connector block 2 to allow a change of state of the disconnect unit. The switches or relays may be remotely actvatable, e.g. electrically by means of remote electrical control signals or activatable only locally to the connector block 2, e.g. manually.

The new equipment may be connected using a fan-out, e.g. with multi-pair connectors which connect to the connectors 7. Optionally a test access point 10 may be provided (additionally) for providing testing facilities for the connections in the MDF (not shown).

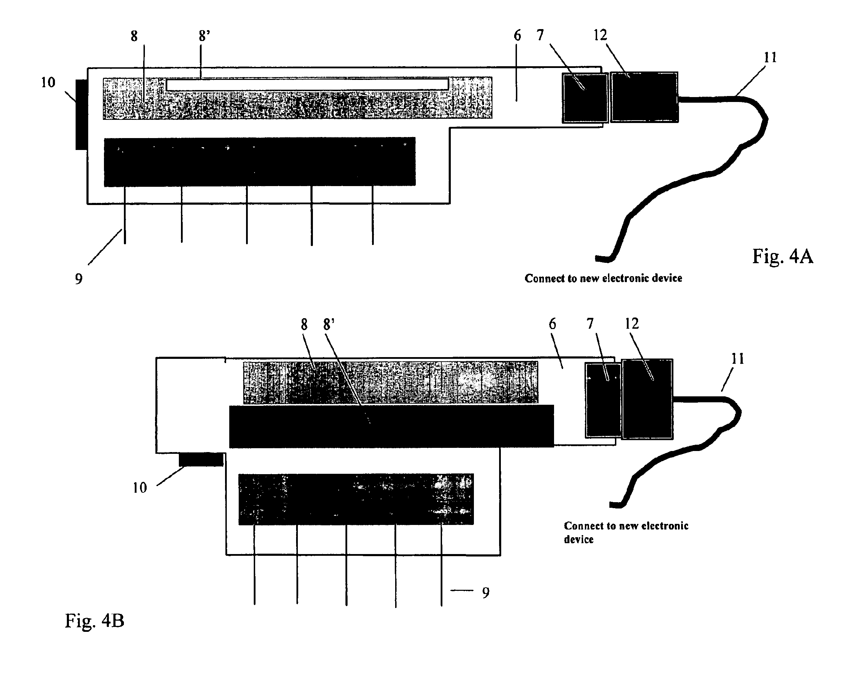

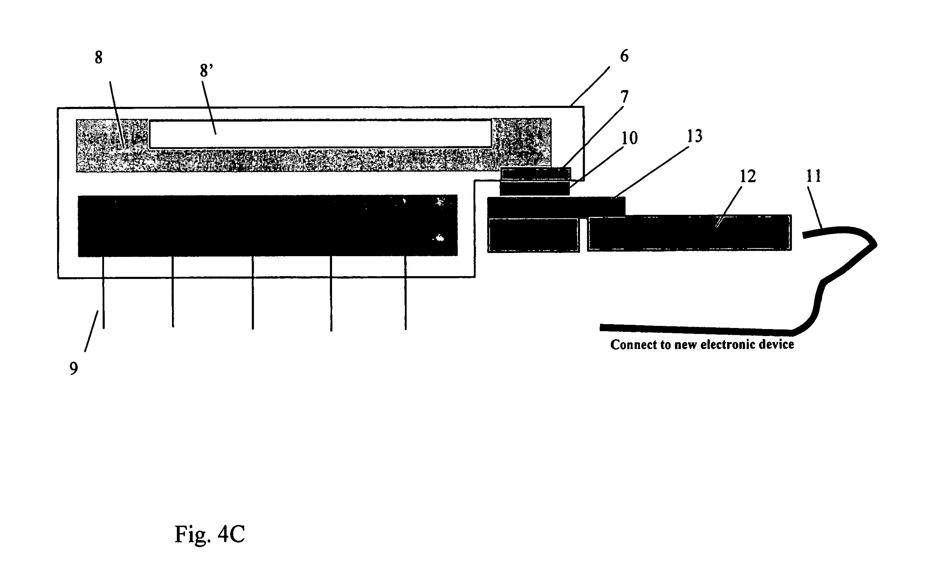

Various embodiments of the present invention are shown schematically in Figures 4 to 11.

Figures 4A to C show various schematic connector blocks in accordance with embodiments of the present invention. Each connector block 2 has conductive elements 9 for connecting to the ground, connectors 16 (not shown) for connection to the connection and protection plane of an MDF to thereby connect an incoming signal from legacy equipment present on the signal plane to the jumper plane as well as optional protection units 17 (not shown) connected to the connectors 16, e.g. for providing overvoltage protection. Such elements 9 may be insertable in the conventional manner. For example, these elements plug into the distribution frame in a conventional manner. Each arrangement shown in Figure 4 has a connector 12, e.g. on a fan-out 11, which is connected by the connector 12 to a connector 7 which is included in the connector block 2 and which provides the connection to the new equipment. The connector 7 may include additional interconnection devices 13 to select a certain number of cable pairs from the total number of these available in the fan-out connector 12, e.g. to select 5 out of 25 pairs (see Fig. 4C). The fan-out 11, for instance, can have 25 pair connectors 12 or 5 pair connectors 12. Also each connector block 2 has a disconnect unit 8 which may be an electrically or a mechanically operated disconnect unit.

Figure 4A in which a mechanically separable device is used for the disconnection unit 8 such as a jumper cable or a connector,

Figure 4B in which the disconnect unit 8 includes a switch 8' such as a dip switch or a slide switch or a relay. The connector block 2 may be a remotely operable unit such as one comprising latched relays 8' in the disconnection unit.

Figure 4C shows a device similar to the one of Figure 4A but with a unit 13 for selecting a certain number of pairs (e.g. 5) from a fan-out connector for more pairs (e.g. 25).

Each connector block in Figure 4 may have an optional test access 10.

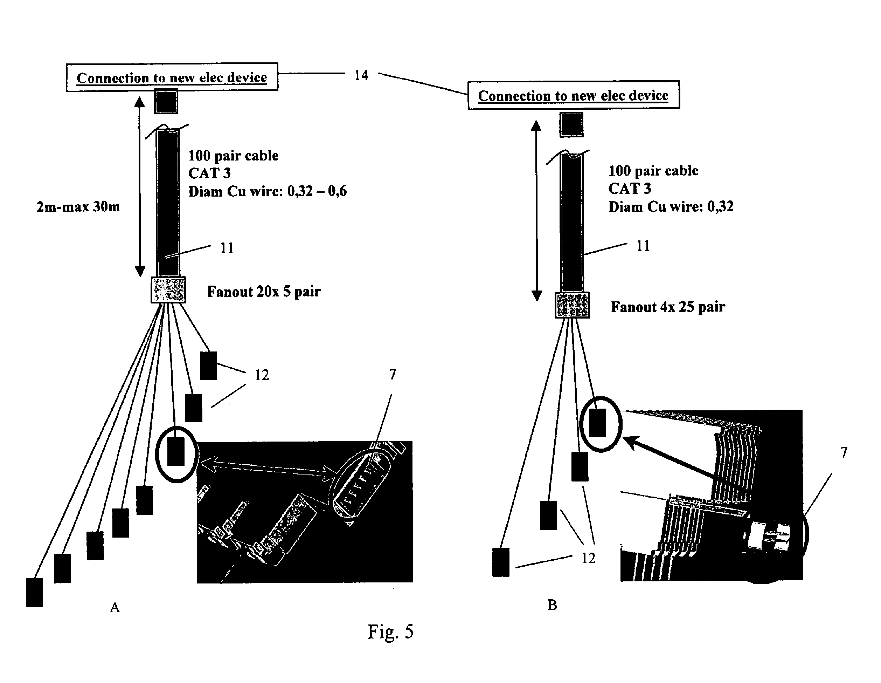

Figure 5A shows a fan-out 11 for connection to a new device such as an MSAN by means of a connector 14, the fan-out comprising cable and 5 pair connectors 12. Each connector 12 can be plugged into a connector 7 of a relevant block 2. In Figure 5B a similar arrangement is shown for a fan-out with 25 pair connectors.

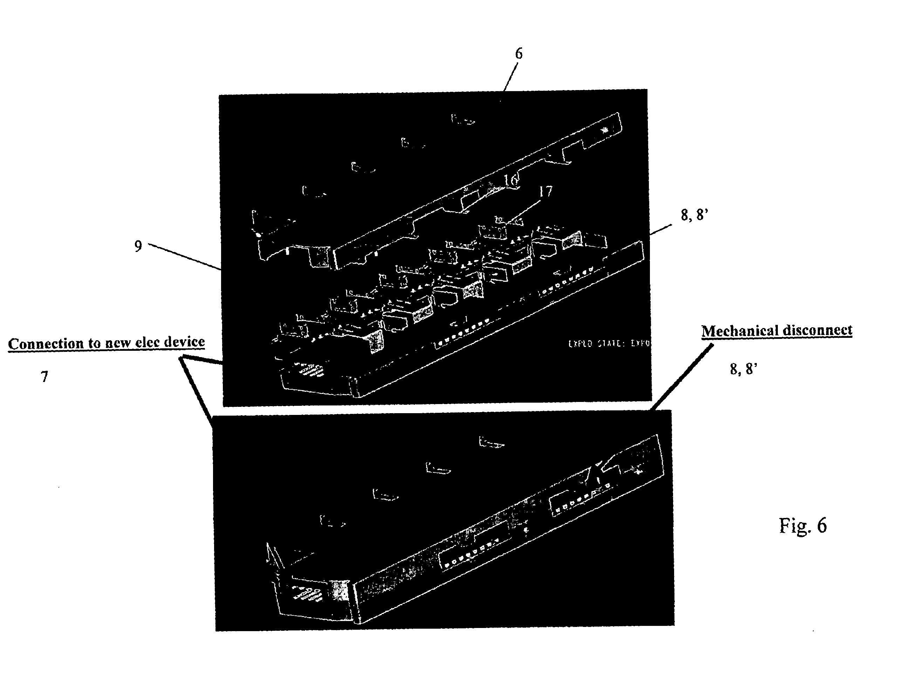

Figures 6A and 6B show exploded views of a connector block 2 in accordance with an embodiment of the present invention. This device has a new equipment connector 7, conductive elongate elements 9 for grounding, optional protection units 17 and connectors 16 for making the connections to the MDF and providing the signal paths to join the signal pane to the jumper plane and a housing 6. In the housing, e.g. on a top edge, one or more mechanical disconnect units 8, 8' are provided. Each of these units comprises a connector or coupler 8 and a disconnect device provided by switches. These disconnect devices may be in the form of slide switches. An optional test access can be provided.

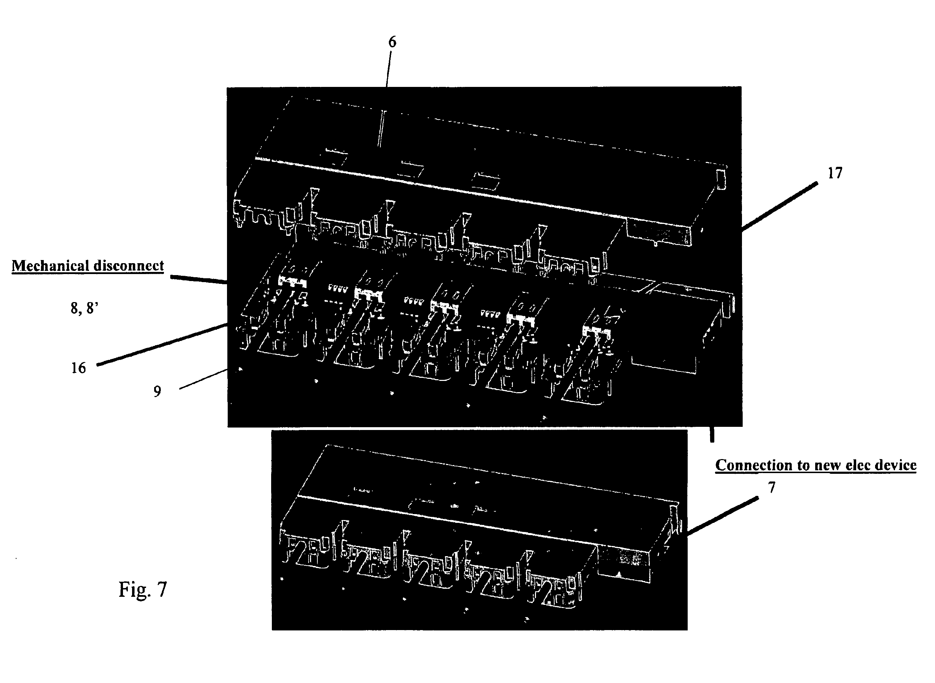

Figures 7A and 7B show exploded views of a connector block 2 in accordance with yet another embodiment with a housing 6, a new equipment connector 7, conductive elongate elements 9 for grounding, optional protection units 17 and connectors 16 for making the connections to the MDF and providing the signal paths to join the signal pane to the jumper plane as well as a mechanical disconnect unit 8 comprising a coupler and a disconnect device 8' such as dipswitches. An optional test access can be provided.

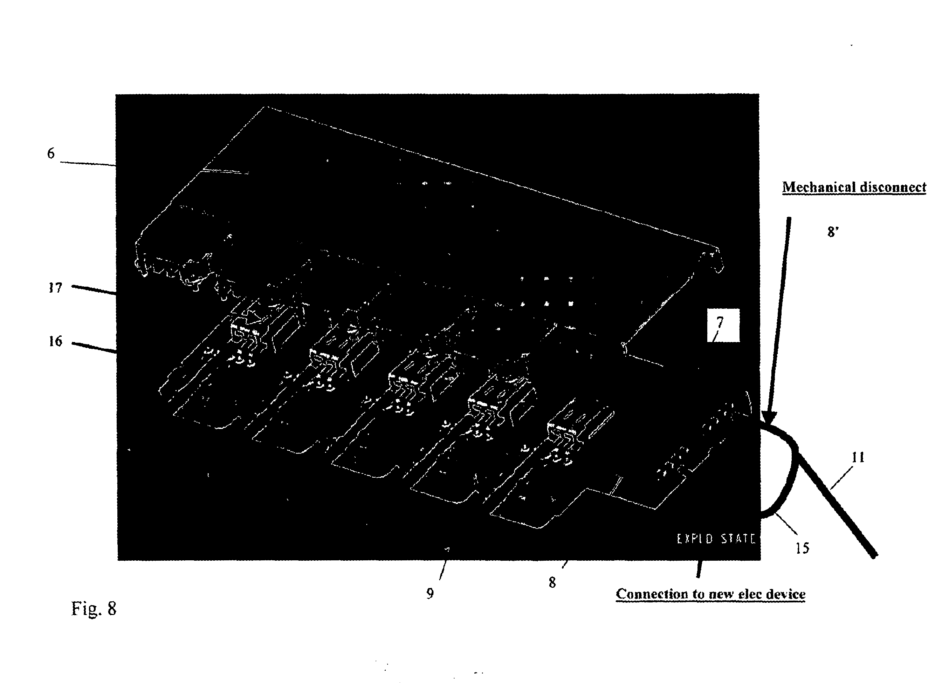

Figure 8 shows a connector block 2 in accordance with a further embodiment. In this device the disconnect device 8' is provided by a jumper cable 15. The disconnect/connect action is obtained by attaching the jumper cable with the fan out 11 with a connector 12 to a connector 7 and then attaching at least one of the ends 8' of the jumper cable to a connector 8 or detaching at least one of the ends 8' of the jumper cable 15. A housing 6, a new equipment connector 7, conductive elongate elements 9 for grounding, optional protection units 17 and connectors 16 for making the connections to the MDF and providing the signal paths to join the signal pane to the jumper plane are provided. Optionally a test access may be provided.

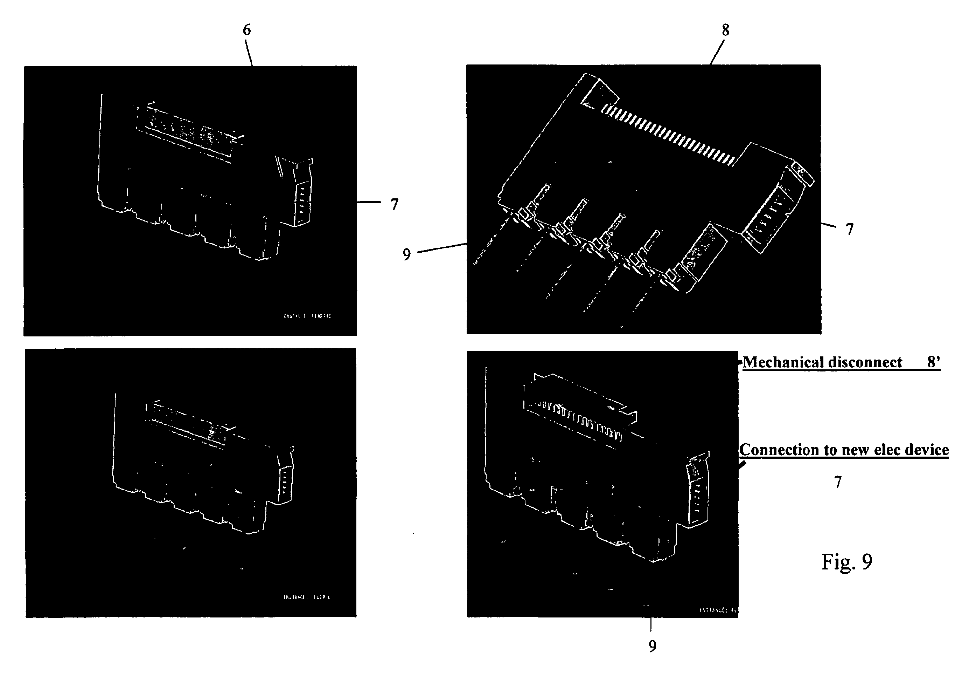

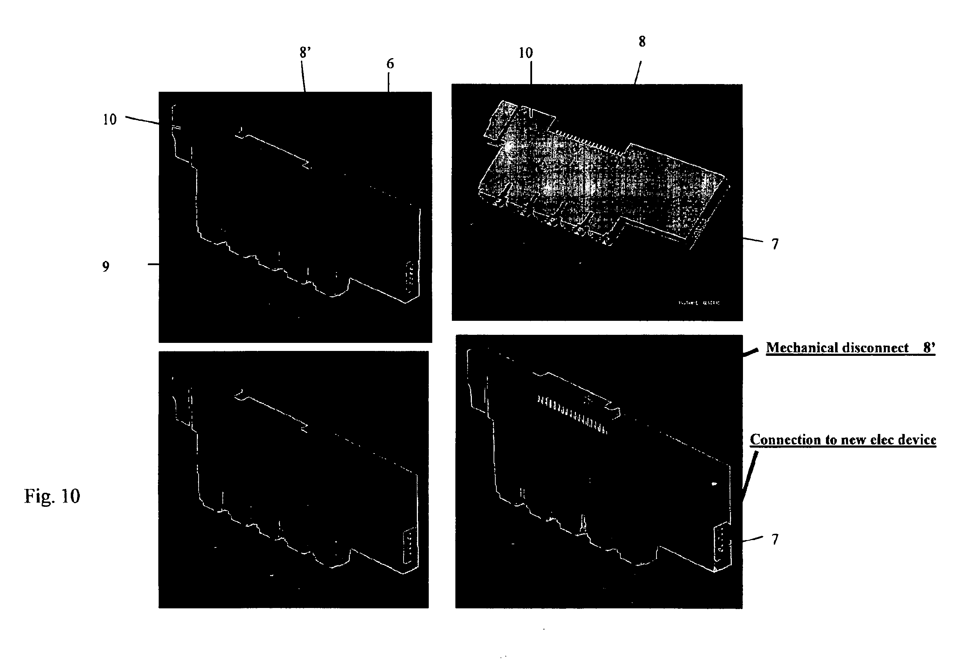

Figure 9 shows a mechanical disconnect unit 8 located on a top edge of the connector block 2. The disconnect unit 8 is in the form of coupler 8 and a connector 8'. A housing 6, and a new equipment connector 7 are provided. Conductive elongate elements 9 for grounding are provided. Optional protection units 17 and connectors 16 for making the connections to the MDF and providing the signal paths to join the signal pane to the jumper plane can be provided but are not shown. An optional test access 10 can be provided as shown in Figure 10. Here the test access unit 10 is provided on a side edge face of the connector block 2.

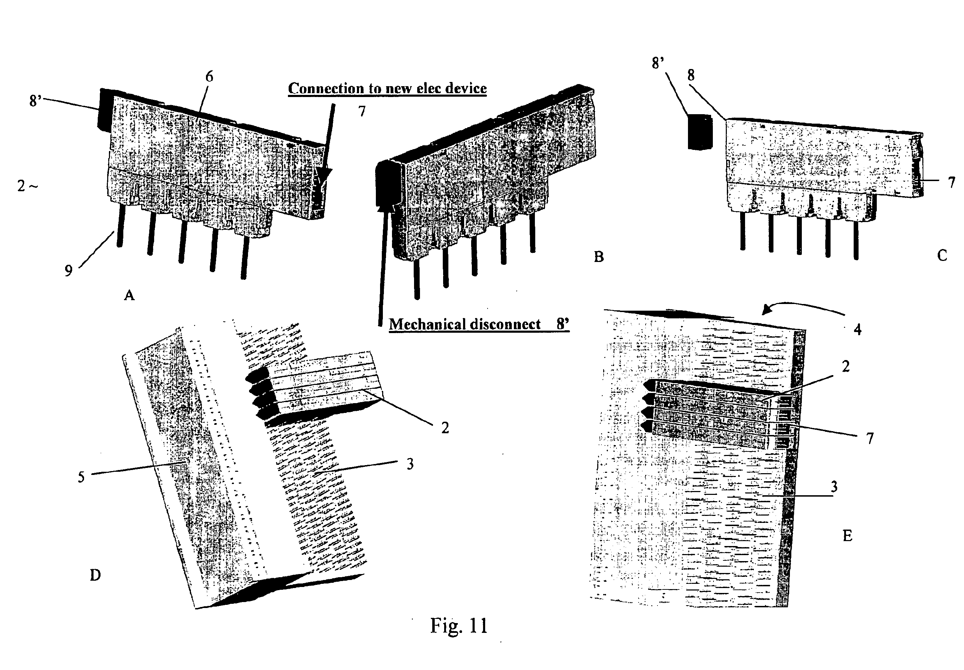

Figure 11 shows schematically how any of the above mentioned connector blocks 2 in accordance with embodiments of the present invention are used. Figure 11a shows a connector block 2 in accordance with any of the embodiments of the present invention. A block housing or body 6 is provided made of an insulating material such as plastic. Elongate conductive elements, e.g. metal elements 9 are provided which plug into the connection and protection plane of the MDF and are used to connect to ground as well as connectors 16 (not shown) for connection to the signal plane 4 of the MDF to connections on the jumper plane 5 via the connection and protection plane so that a signal applied to the signal plane 4 is transferred to the jumper plane 5. Optional protection units 17 (not shown) are also provided in electrical contact with the connectors 16 for providing protection, e.g. overvoltage protection. The signal is provided from a legacy device such as a legacy switch. Unit 7 is a connector for connecting new equipment to the MDF. It provides a signal path for a signal from the new equipment to the jumper plane 5 as well as either maintaining the signal path from the old legacy device. There are potentially parallel pathways between the new equipment and the jumper plane and between the legacy equipment and the jumper plane. Alternatively, only one pathway is available depending on whether the disconnect element 8' is inserted or not. The possibilities are as follows:
A) Connector block inserted in frame, no disconnect function is activated, e.g. disconnect unit inserted or switched off (alternatively: not inserted or switched on) connections to and signal pathways for the legacy and the new device are provided in parallel. Disconnect unit activated, e.g. disconnect unit removed or switched on (alternatively: inserted or switched off): legacy device disconnected, new device still connected.
B) Connector block inserted in frame, no disconnect function is activated, e.g. disconnect unit inserted or switched off (alternatively: not inserted or switched on) - connections to and signal pathway for the new device are provided with no connection to legacy device. Disconnect unit activated, e.g. disconnect unit removed or switched on (alternatively: inserted or switched off): legacy device connected, new device not connected.
C) Connector block inserted in frame, no disconnect function is activated, e.g. disconnect unit inserted or switched off (alternatively: not inserted or switched on) - connections to and signal pathway for the new device are provided with no connection to legacy device. Disconnect unit activated, e.g. disconnect unit removed or switched on (alternatively: inserted or switched off): legacy device connected and new device are connected in parallel.
D) Connector block inserted in frame, no disconnect function is activated, e.g. disconnect unit inserted or switched off (alternatively: not inserted or switched on) - connections to and signal pathway for the legacy device are provided with no connection to new device. Disconnect unit activated, e.g. disconnect unit removed or switched on (alternatively: inserted or switched off): legacy device connected and new device are connected in parallel.
E) Connector block inserted in frame, no disconnect function is activated, e.g. disconnect unit inserted or switched off (alternatively: not inserted or switched on) - connections to and signal pathway for the legacy device are provided with no connection to new device. Disconnect unit activated, e.g. disconnect unit removed or switched on (alternatively: inserted or switched off): new device connected, legacy device not connected.

All of A) to C) allow connection to be made to the new device and a return to the legacy device if required. In the case of A), in a first state of the connector block the legacy device and the new device are connected in parallel which allows the legacy device to be used or the new device to be used. In a second state only the new device can be used. In the case of B), in a first state of the connector block only the new device is connected and can be used. In a second state only the legacy device can be used, e.g. when returning after failure of the new device. In the case of C), in a first state of the connector block only the new device is connected. In a second state the legacy device and the new device are connected in parallel, i.e. either the legacy or the new device can be used, e.g. when returning after failure of the new device. Of these A) is preferred.

All of A), D) and E) allow connection to be made to the legacy device and a change to the new device as required. In the case of A), in a first state of the connector block the legacy device and the new device are connected in parallel which allows the legacy device to be used. In a second state only the new device can be used. In the case of D), in a first state of the connector block only the legacy device is connected. In a second state the legacy device and the new device are connected in parallel, i.e. the new device can be used. In the case of E), in a first state of the connector block only the legacy device is connected and can be used. In a second state only the new device can be used. Of these A) is still preferred but and E) is an acceptable alternative.

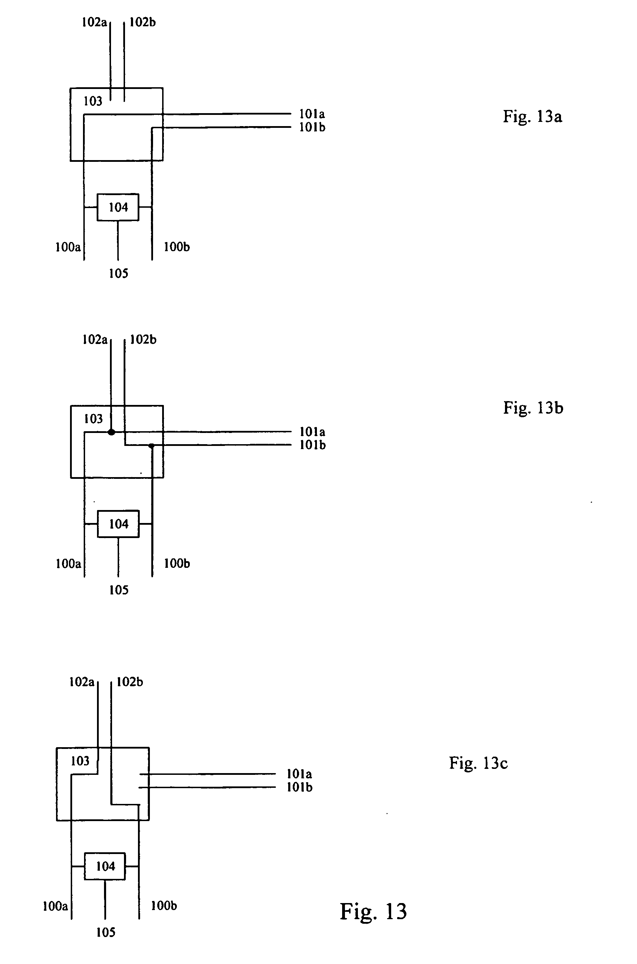

Preferred embodiments are shown schematically in Fig. 13. The lines 100a and 100b are connected to the subscriber line going out from the remote device or from the central office/exchange. Lines 101a and 101b are connected to the first signal path, e.g. to a legacy switch. Lines 102a and 102b are connected to the second signal path, e.g. the new electronic device such as a switch providing xDSL service. Reference numeral 103 refers to a block including the disconnect unit. An optional protection unit, e.g. overvoltage protection is shown as item 104. A connection to ground, e.g. pin 9, is given the reference number 105.

As shown in Fig. 13a and 13b the first state of the connector block (which depends on the sate of the disconnect unit as indicated above) can be either only connected to the first signal path, e.g. providing a POTS service or both first and second signal paths are provided. In the second state shown schematically in Fig. 13c only the second signal path, e.g; the new telecommunications service such as xDSL is provided.

Figure 11B shows the disconnect element 8' inserted in the disconnect unit 8 and Figure 11C shows it removed. Note: where switches or relays are used this disconnect/connect function is provided by switches or relays which do not require physical removal from the connector block 2. The new equipment may be connected using a fan-out with connectors which connect to the connectors 7 (not shown). Optionally a test access point may be provided for providing testing facilities for the connections in the MDF (not shown). A disconnect unit 8 allows the disconnection of the connections between the signal plane 4 and the jumper plane 5 which are provided by the conductive elements 9. The disconnect unit 8 allows connection or disconnection of the legacy equipment as well as the connection or disconnection of the new equipment. Dependent upon the design any of the system A) to C) mentioned above may be implemented. The disconnect unit 8 may be remotely operated, e.g. it comprises relays, or it may be a mechanical disconnect unit such as a manually operated switch or a manually removable connector.

Figures 11D and E show to views of an MDF with a connector block attached according to embodiments of the present invention and having the disconnect element attached. The connection and protection plane, the signal plane and the jumper plane are indicated.

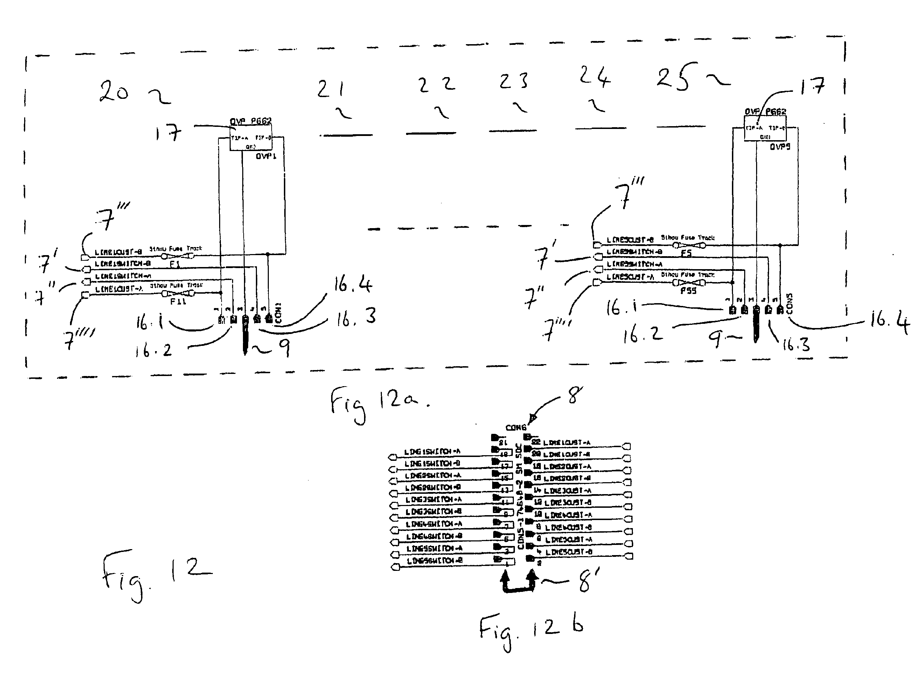

Figures 12a and b show schematic wiring diagrams for a connector block in accordance with an embodiment of the invention. In Figure 12a a connector block for a distribution frame is shown schematically. This has five service connection locations 20 - 25 whereby only the first and the last are shown. Each location has an earthing pin 9 as shown for example in Figures 3, 4 and 6 to 11. Also each location also has a number of contacts 16, e.g. 16.1 to 16.4, each for making contact with, for example, pins sticking up from the distribution frame and pairwise connectable to customer premises and to an electronic device such as a legacy switch. Such contacts 16 are shown in Figures 3, 6-8 flanking the grounding pin 9. Pins on the distribution frame are for making contact with a pair of cores of a telephone cable - one pair in the direction of the customer premises and one pair in the direction of the legacy switch. For example, once the connector block is inserted in the distribution frame pins of the distribution frame are inserted in contacts 16.1 and 16.4, which are thereby connected to the customer premises and contacts 16.2 and 16.3 to the legacy switch (see Fig. 1 for the placement of these items). The connector block could also have pins and the frame female contacts or any other form of contacts. A protection circuit 17 may also be provided as shown, e.g. for overvoltage protection, connected for example to the customer lines. Also the connector block has connectors 7 for connecting to an additional service, e.g. an xDSL service. These connectors 7 are pairwise connected to a new electronic device, e.g. one pair, 7' and 7", to a switch on the network side and one pair 7"' and 7"" to the customer premises. Fuses (F1 and F11 in service connection location 20 ..... up to F5 and F55 in service connection 25), such as fuse wires, can be placed appropriately to protect equipment, e.g. on the customer side by placing fuses or fuse wires F1.....F5 and F11....F55 in the lines 7"' and 7"" respectively. A connector 12 makes contact with the contacts 7 to provide the additional service, e.g. by insertion. Due to the internal wiring of the connector block, e.g. metal wiring, especially copper wiring on a PCB, the individual lines connected to the contacts 7 are connected to the equivalent customer or network side contacts 16.1 to 16.4 as well as the protection unit 17 so that the signal paths to the legacy switch are in parallel to the signal paths to the new switch providing access to the xDSL service.

The way a disconnection unit can be implemented is shown schematically in Figure 12B. The contacts shown in this figure are for all five locations 20 to 25. One can visualise the contacts in the centre of Figure 12B as being pairwise located within the contacts 16 of Figure 12a, i.e. these contacts are on the legacy switch side of the connector block. On each side of the disconnect unit the contacts are provided as couplers to the switch or customer side. There are two contacts 16 for the customer side and two contacts 16 for the network side. As there are five locations, then 5x2 or 10 contacts are provided in total by the connector block for the customer side and 10 for the network side. When the disconnect device 8' is inserted in the disconnect unit 8, the legacy switch connections are coupled through to the network side, i.e. the legacy switch is operational and because the contacts 7 are connected through in parallel, also the additional switch is connected in as well. Signals can be provided either by the legacy switch or by the new switch, e.g. for the xDS1 service. This allows graceful fall back in case the new service does not work correctly.

If the disconnect device 8' is removed (or disconnected by other means, e.g. switches, relays, etc.) then the connection between the legacy switch and the network side is broken. This leaves only the new switch operational. The interruptions with the pairs are in the connector block itself - this means that the lengths of cable open circuited are reduced to a minimum, hence reducing the "stub effect" to a minimum. If the disconnection unit is reinserted then the legacy switch is made operational again.

Optionally a test access may be provided but this is not shown in Figure 12.

It is to be understood that although preferred embodiments, specific constructions and configurations, as well as materials, have been discussed herein for devices according to the present invention, various changes or modifications in form and detail may be made.

## Claims

1. A distribution frame with at least one connector block, the connector block being mechanically connected with the distribution frame to thereby cooperate electrically with the distribution frame to provide a first signal path between a first side and a second side of the distribution frame, the first side of the distributor frame being connected to a subscriber line, and the second side of the distributor frame and the first signal path being connected to a legacy switch, **characterised by** the connector block having connector means for connecting a signal cable for an additional telecommunication service and being provided with a communication path for providing a second signal path between the signal cable and the first side of the distribution frame, the signal cable being connected to a new electronic device for providing the additional telecommunication service, and the connector block also having a disconnection unit for providing two states of the connector block, in the first state at least the first signal path is provided and in the second state at least the second signal path is provided.

2. The distribution frame according to claim 1 wherein in the first state the second signal path is not provided.

3. The distribution frame according to any previous claim, wherein in the second state the first signal path is not provided.

4. The distribution frame according to any previous claim, wherein the disconnection unit can be switched from the first state to the second state remotely.

5. The distribution frame according to any of the claims 1 to 3, wherein the disconnection unit comprises a disconnection device and a coupler, the coupler providing a connection to the distribution frame when the connector block is inserted therein, the disconnection device being remotely activatable or activatable only locally to the distribution frame.

6. The distribution frame according to claim 5, wherein the locally activatable disconnection device is a switch, a relay, a jumper cable or a connector.

7. The distribution frame according to claim 5, wherein the remotely activatable disconnection device is a switch or a relay.

8. The distribution frame according to any previous claim, wherein the additional telecommunications service is not just a test access.

9. The distribution frame according to any previous claim, the connector block further comprising a test access point.

10. The distribution frame according to any previous claim wherein the second signal path is for a DSL service.

11. The distribution frame according to any of the claims 1 to 10, wherein the disconnection unit is adapted to provide the first and the second signal paths in parallel in the first state.

12. The distribution frame according to any previous claim wherein the first signal path is for a telephone service.

13. A connector block for use with a distribution frame, the connector block having means for connecting the connector block with the distribution frame to thereby cooperate electrically with the distribution frame to provide a first signal path between a first side and a second side of the distribution frame, **characterised in that** the connector block also has connector means for connecting a signal cable for an additional telecommunication service and being provided with a communication path for providing a second signal path between the signal cable and the first side of the distribution frame and further comprising a disconnection unit for providing two states of the connector block, in the first state at least the first signal path being provided and in the second state at least the second signal path being provided.

14. The connector block according to claim 13 wherein in the first state the second signal path is not provided.

15. The connector block according to any of the claims 13 or 14, wherein in the second state the first signal path is not provided.

16. The connector block according to any of the claims 13 to 15, wherein the disconnection unit can be switched from the first sate to the second state remotely.

17. The connector block according to any of the claims 13 to 15, wherein the disconnection unit comprises a disconnection device and a coupler, the coupler providing a connection to the distribution frame when the connector block is connected thereto, the disconnection device being remotely activatable or activatable only local to the connector block.

18. The connector block according to claim 17, wherein the locally activatable disconnection device is a switch, a relay, a jumper cable or a connector.

19. The connector block according to claim 17, wherein the remotely activatable disconnection device is a switch or a relay.

20. The connector block according to any of the claims 13 to 19, wherein the disconnection unit is adapted to provide the first and the second signal paths in parallel in the first state.

21. The connector block according to any of the claims 13 to 20, the connector block further comprising a test access point.

22. A method of connecting an additional service to a distribution frame with at least one connector block, the connector block being mechanically connected with the distribution frame to thereby cooperate electrically with the distribution frame to provide a first signal path between a first side and a second side of the distribution frame, the method comprising:
connecting a signal cable for the additional telecommunication service to the connector block to thereby provide a second signal path between the signal cable and the first side of the distribution frame and
the connector block switching between two states of the connector block, in the first state at least the first signal path is provided and in the second state at least the second signal path is provided.

## Patentansprüche

1. Verteiler mit mindestens einem Anschlussblock, wobei der Anschlussblock mechanisch mit dem Verteiler verbunden ist, um **dadurch** elektrisch mit dem Verteiler zu kooperieren, um einen ersten Signalweg zwischen einer ersten Seite und einer zweiten Seite des Verteilers bereitzustellen, wobei die erste Seite des Verteilers mit einer Teilnehmerleitung verbunden ist und die zweite Seite des Verteilers und der erste Signalweg mit einer Vorläufer-Vermittlungseinrichtung verbunden sind, **gekennzeichnet dadurch, dass** der Anschlussblock über Anschlussmittel zum Anschließen eines Signalkabels für einen zusätzlichen Telekommunikationsdienst verfügt und mit einem Kommunikationsweg zum Bereitstellen eines zweiten Signalwegs zwischen dem Signalkabel und der ersten Seite des Verteilers versehen ist, wobei das Signalkabel mit einer neuen elektronischen Vorrichtung zum Bereitstellen des zusätzlichen Telekommunikationsdienstes verbunden ist, und
der Anschlussblock außerdem über eine Trenneinheit verfügt, um zwei Zustände des Anschlussblocks bereitzustellen, wobei in dem ersten Zustand mindestens der erste Signalweg bereitgestellt wird und in dem zweiten Zustand mindestens der zweite Signalweg bereitgestellt wird.

2. Verteiler nach Anspruch 1, wobei in dem ersten Zustand der zweite Signalweg nicht bereitgestellt wird.

3. Verteiler nach einem der vorstehenden Ansprüche, wobei in dem zweiten Zustand der erste Signalweg nicht bereitgestellt wird.

4. Verteiler nach einem der vorstehenden Ansprüche, wobei die Trenneinheit entfernt von dem ersten Zustand in den zweiten Zustand geschaltet werden kann.

5. Verteiler nach einem der Ansprüche 1 bis 3, wobei die Trenneinheit eine Trennvorrichtung und einen Koppler umfasst, wobei der Koppler eine Verbindung zu dem Verteiler bereitstellt, wenn der Anschlussblock darin eingesetzt ist, wobei die Trennvorrichtung entfernt aktivierbar ist oder nur lokal für den Verteiler aktivierbar ist.

6. Verteiler nach Anspruch 5, wobei die lokal aktivierbare Trennvorrichtung ein Schalter, ein Relais, ein Uberbrückungskabel oder ein Steckverbinder ist.

7. Verteiler nach Anspruch 5, wobei die entfernt aktivierbare Trennvorrichtung ein Schalter oder ein Relais ist.

8. Verteiler nach einem der vorstehenden Ansprüche, wobei der zusätzliche Telekommunikationsdienst nicht nur ein Prüfzugang ist.

9. Verteiler nach einem der vorstehenden Ansprüche, wobei der Anschlussblock weiterhin einen Prüfzugangspunkt umfasst.

10. Verteiler nach einem der vorstehenden Ansprüche, wobei der zweite Signalweg für einen DSL-Dienst ist.

11. Verteiler nach einem der Ansprüche 1 bis 10, wobei die Trenneinheit angepasst ist, um den ersten und den zweiten Signalweg parallel in dem ersten Zustand bereitzustellen.

12. Verteiler nach einem der vorstehenden Ansprüche, wobei der erste Signalweg für einen Telefondienst ist.

13. Anschlussblock zur Verwendung mit einem Verteiler, wobei der Anschlussblock über Mittel zum Verbinden des Anschlussblocks mit dem Verteiler verfügt, um **dadurch** elektrisch mit dem Verteiler zu kooperieren, um einen ersten Signalweg zwischen einer ersten Seite und einer zweiten Seite des Verteilers bereitzustellen, **gekennzeichnet dadurch, dass** der Anschlussblock außerdem über Anschlussmittel zum Anschließen eines Signalkabels für einen zusätzlichen Telekommunikationsdienst verfügt und mit einem Kommunikationsweg zum Bereitstellen eines zweiten Signalwegs zwischen dem Signalkabel und der ersten Seite des Verteilers versehen ist und weiterhin eine Trenneinheit umfasst, um zwei Zustände des Anschlussblocks bereitzustellen, wobei in dem ersten Zustand mindestens der erste Signalweg bereitgestellt wird und in dem zweiten Zustand mindestens der zweite Signalweg bereitgestellt wird.

14. Anschlussblock nach Anspruch 13, wobei in dem ersten Zustand der zweite Signalweg nicht bereitgestellt wird.

15. Anschlussblock nach einem der Ansprüche 13 oder 14, wobei in dem zweiten Zustand der erste Signalweg nicht bereitgestellt wird.

16. Anschlussblock nach einem der Ansprüche 13 bis 15, wobei die Trenneinheit entfernt von dem ersten Zustand in den zweiten Zustand geschaltet werden kann.

17. Anschlussblock nach einem der Ansprüche 13 bis 15, wobei die Trenneinheit eine Trennvorrichtung und einen Koppler umfasst, wobei der Koppler eine Verbindung zu dem Verteiler bereitstellt, wenn der Anschlussblock damit verbunden ist, wobei die Trennvorrichtung entfernt aktivierbar ist oder nur lokal für den Anschlussblock aktivierbar ist.

18. Anschlussblock nach Anspruch 17, wobei die lokal aktivierbare Trennvorrichtung ein Schalter, ein Relais, ein Uberbrückungskabel oder ein Steckverbinder ist.

19. Anschlussblock nach Anspruch 17, wobei die entfernt aktivierbare Trennvorrichtung ein Schalter oder ein Relais ist.

20. Anschlussblock nach einem der Ansprüche 13 bis 19, wobei die Trenneinheit angepasst ist, um den ersten und den zweiten Signalweg parallel in dem ersten Zustand bereitzustellen.

21. Anschlussblock nach einem der Ansprüche 13 bis 20, wobei der Anschlussblock weiterhin einen Prüfzugangspunkt umfasst.

22. Verfahren zum Verbinden eines zusätzlichen Dienstes mit einem Verteiler mit mindestens einem Anschlussblock, wobei der Anschlussblock mechanisch mit dem Verteiler verbunden ist, um **dadurch** elektrisch mit dem Verteiler zu kooperieren, um einen ersten Signalweg zwischen einer ersten Seite und einer zweiten Seite des Verteilers bereitzustellen, das Verfahren umfassend:
Anschließen eines Signalkabels für den zusätzlichen Telekommunikationsdienst an den Anschlussblock, um **dadurch** einen zweiten Signalweg zwischen dem Signalkabel und der ersten Seite des Verteilers bereitzustellen, und
Umschalten, durch den Anschlussblock, zwischen zwei Zuständen des Anschlussblocks, wobei in dem ersten Zustand mindestens der erste Signalweg bereitgestellt wird und in dem zweiten Zustand mindestens der zweite Signalweg bereitgestellt wird.

## Revendications

1. Trame de distribution présentant au moins un bloc de connexion, le bloc de connexion étant mécaniquement connecté à la trame de distribution pour coopérer par conséquent électriquement avec la trame de distribution en vue de fournir un premier chemin de signal entre un premier côté et un second côté de la trame de distribution, le premier côté de la trame de distribution étant connecté à une ligne d'abonné, et le second côté de la trame de distribution et le premier chemin de signal étant connectés à un commutateur existant, **caractérisée en ce que** le bloc de connexion présente des moyens de connexion pour connecter un câble d'interface destiné à un service de télécommunication supplémentaire et est équipé d'un chemin de communication destiné à fournir un second chemin de signal entre le câble d'interface et le premier côté de la trame de distribution, le câble d'interface étant connecté à un nouveau dispositif électronique en vue de délivrer le service de télécommunication supplémentaire, et
le bloc de connexion présente également une unité de déconnexion destinée à fournir deux états du bloc de connexion, où dans le premier état au moins le premier chemin de signal est délivré et dans le second état au moins le second chemin de signal est délivré.

2. Trame de distribution selon la revendication 1, dans laquelle, dans le premier état, le second chemin de signal n'est pas délivré.

3. Trame de distribution selon l'une quelconque des revendications précédentes, dans laquelle, dans le second état, le premier chemin de signal n'est pas délivré.

4. Trame de distribution selon l'une quelconque des revendications précédentes, dans laquelle l'unité de déconnexion peut être commutée à distance, du premier état au second état.

5. Trame de distribution selon l'une quelconque des revendications 1 à 3, dans laquelle l'unité de déconnexion comporte un dispositif de déconnexion et un coupleur, le coupleur délivrant une connexion à la trame de distribution lorsque le bloc de connexion y est inséré, le dispositif de déconnexion étant activable à distance, ou activable uniquement localement au niveau de la trame de distribution.

6. Trame de distribution selon la revendication 5, dans laquelle le dispositif de déconnexion activable localement est un commutateur, un relais, un câble survolteur ou un connecteur.

7. Trame de distribution selon la revendication 5, dans laquelle le dispositif de déconnexion activable à distance est un commutateur ou un relais.

8. Trame de distribution selon l'une quelconque des revendications précédentes, dans laquelle le service de télécommunication supplémentaire n'est pas uniquement un accès de test.

9. Trame de distribution selon l'une quelconque des revendications précédentes, dans laquelle le bloc de connexion comporte en outre un point d'accès de test.

10. Trame de distribution selon l'une quelconque des revendications précédentes, dans laquelle le second chemin de signal est un service de ligne d'abonné numérique (DSL).

11. Trame de distribution selon l'une quelconque des revendications 1 à 10, dans laquelle l'unité de déconnexion est apte à fournir les premier et second chemins de signal en parallèle dans le premier état.

12. Trame de distribution selon l'une quelconque des revendications précédentes dans laquelle le premier chemin de signal est un service téléphonique.

13. Bloc de connexion destiné à être utilisé avec une trame de distribution, le bloc de connexion présentant des moyens permettant de connecter le bloc de connexion à la trame de distribution pour coopérer par conséquent électriquement avec la trame de distribution en vue de fournir un premier chemin de signal entre un premier côté et un second côté de la trame de distribution, **caractérisé en ce que** le bloc de connexion présente également des moyens de connexion permettant de connecter un câble d'interface destiné à un service de télécommunication supplémentaire et est équipé d'un chemin de communication permettant de délivrer un second chemin de signal entre le câble d'interface et le premier côté de la trame de distribution, et comportant en outre une unité de déconnexion destinée à fournir deux états du bloc de connexion, où, dans le premier état, au moins le premier chemin de signal est délivré, et dans le second état, au moins le second chemin de signal est délivré.

14. Bloc de connexion selon la revendication 13, dans lequel, dans le premier état, le second chemin de signal n'est pas délivré.

15. Bloc de connexion selon l'une quelconque des revendications 13 ou 14, dans lequel, dans le second état, le premier chemin de signal n'est pas délivré.

16. Bloc de connexion selon l'une quelconque des revendications 13 à 15, dans lequel l'unité de déconnexion peut être commutée à distance, du premier état au second état.

17. Bloc de connexion selon l'une quelconque des revendications 13 à 15, dans lequel l'unité de déconnexion comporte un dispositif de déconnexion et un coupleur, le coupleur délivrant une connexion à la trame de distribution lorsque le bloc de connexion y est connecté, le dispositif de déconnexion étant activable à distance, ou activable uniquement localement au niveau de la trame de distribution.

18. Bloc de connexion selon la revendication 17, dans lequel, le dispositif de déconnexion activable localement est un commutateur, un relais, un câble survolteur ou un connecteur.

19. Bloc de connexion selon la revendication 17, dans lequel le dispositif de déconnexion activable à distance est un commutateur ou un relais.

20. Bloc de connexion selon l'une quelconque des revendications 13 à 19, dans lequel l'unité de déconnexion est apte à fournir les premier et second chemins de signal en parallèle dans le premier état.

21. Bloc de connexion selon l'une quelconque des revendications 13 à 20, le bloc de connexion comprenant en outre un point d'accès de test.

22. Procédé de connexion d'un service supplémentaire à une trame de distribution présentant au moins un bloc de connexion, le bloc de connexion étant mécaniquement connecté à la trame de distribution pour coopérer par conséquent électriquement avec la trame de distribution en vue de fournir un premier chemin de signal entre un premier côté et un second côté de la trame de distribution, le procédé comprenant les étapes ci-dessous consistant à :
connecter un câble d'interface, destiné au service de télécommunication supplémentaire, au bloc de connexion en vue de fournir par conséquent un second chemin de signal entre le câble d'interface et le premier côté de la trame de distribution et
le bloc de connexion étant commuté entre deux états du bloc de connexion, dans le premier état, au moins le premier chemin de signal est délivré et dans le second état, au moins le second chemin de signal est délivré.
